# EUROPEAN PATENT SPECIFICATION

(11) **EP 1 821 081 B1**
(45) Date of publication and mention of the grant of the patent: **31.10.2012**
(21) Application number: 06075377.9
(22) Date of filing: 21.02.2006
(51) Int. Cl.: G01F 23/36, G01F 23/32, F16J 15/32

(54) **Liquid-tight rotating arm fuel gauge**
Flüssigkeitsdichter Kraftstoffmesser mit einem rotierenden Arm
Jauge de carburant étanche avec un bras rotatif

(43) Date of publication of application: 22.08.2007
(73) Proprietor: Indebrás Indústria Electromecânica Brasileira Ltda, 05113-020 Sao Paulo (BR)
(72) Inventor: Vargas da Silva, Carlos Eduardo, 05113-020 Sao Paulo (SP) (BR)
(74) Representative: Monzón de la Flor, Luis Miguel

(56) References cited:
- EP-A- 0 474 950
- DE-A1- 3 221 526
- DE-A1- 3 627 116
- DE-A1- 4 129 060
- DE-U1- 20 000 281
- DE-U1-202005 006 553

## Description

### FIELD OF THE INVENTION

The present invention refers to a sealing assembly for a watertight fuel-gauge housing, more specifically to an improved, more efficient fuel-gauge housing for use in the automobile industry particularly designed to better suit to the harsh conditions it is submitted to when in use.

### DESCRIPTION OF THE PRIOR ART

Typically a watertight fuel-gauge for use with a motor vehicle comprises a housing designed to be at least partially positioned in the interior of the fuel tank, the housing being provided with mounting flanges that cooperates with matching mounting projections in the tank. A gauge mechanism is mounted within said housing, the mechanism comprising a resistor, a cursor acting upon said resistor, said cursor being one end of an arm which opposite end is fixedly mounted to a shaft to rotate therewith, one end of said shaft projecting through an opening formed on the housing and connecting to one end of a rod which opposite end has a floating device mounted thereto.

As the position of the floating device varies according to the level of the fuel within the tank, said rod is forced to rock, which rocking rotates the shaft within the housing, the arm attached thereto and, consequently, the cursor acting against the resistor, thereby providing an indication of the level of fuel within the tank.

The opening in the housing through which said shaft projects is covered with a sealing assembly, to provide a watertight gauge, said sealing assembly typically comprising one or more "O" shaped rings positioned on the inner perimeter of the opening through which said shaft projects.

Notwithstanding the wide use of watertight gauges having a construction as described above, this structure is not totally satisfactory because usually said "O" shaped rings do not have enough dimensional compatibility with the shaft. Typically said rings will have an inner diameter bigger than the outer diameter of the shafts, therefore allowing the fuel to leak into the interior of the housing which may damage the resistor/cursor mechanism. Also, the material of the rings may yield with time giving birth to the same problem. On the contrary, when the inner diameter of the rings is smaller than the outer diameter of the shafts, this may stop the rotating movement of the shafts thereby affecting the operation of the fuel-gauge.

Another serious problem with the above mentioned "O" shaped sealing rings generally used to seal the housing of a fuel-gauge having the above construction is that they inflate and expand in the presence of fuel and this may cause them to prevent the shafts from rotating and thereby affect the operation of the fuel-gauge.

It is known in the State of the Art a liquid level sensor as the one disclosed in DE 3627116 wherein in a housing there is arranged not only a chamber with a sliding contact and a resistance strip but also a damping chamber. A shutter is seated in the latter in a rotationally fixed manner on a shaft, which on the outside of the housing bears a lever with a float. The damping chamber is filled with damping oil. If the shaft rotates, the shutter displaces the damping oil from one part of the damping chamber to the other, so that the rotary movement of the shaft is damped.

it is also known in the state of the art the patent DE 200 00 281 U1 wherein it is disclosed a lip seal which is especially tautened or tensioned causing it to maintain sealing contact with a shaft surface. A chamber beyond the seal is pressurized. The pressure difference between the inner chamber and outer chamber is set to a level at which no significant quantity of the medium in the outer chamber passes the seal to the inner chamber.

It is known in the State of the Art a radial shaft seal as the one disclosed in DE 20 2005 006553 U1 which comprises a membrane (1) and a support ring (2) which has a centering section (5) on its outer rim. This press-fits into the seal mounting (4). There is a wedge-shaped section (13) on the inner rim of the membrane support whose upper surface is at 45 - 55[deg] to the longitudinal axis of the shaft.

### DESCRIPTION OF THE INVENTION

In view of the foregoing disadvantages inherent to the known types of sealing assemblies for watertight fuel-gauge housing of known designs and configurations now present in the prior art, the present invention provides an improved sealing assembly.

The sealing assembly for use in a watertight fuel-gauge according to the present invention was specially developed to overcome the above-discussed problems of the prior art.

The present invention provides a sealing assembly for a watertight fuel-gauge housing comprising a sealing washer and a mounting packing tightly positioned within a seat formed around the opening of said housing through which said shaft projects, said sealing washer having a central opening with an inner diameter slightly smaller than the outer diameter of said shaft to form a folded lip around the shaft when the washer is mounted thereupon, and being positioned between the bottom of the seat and the mounting packing.

This constructions solves the above-discussed problems related to the use of "O" shaped rings for sealing the housing of the fuel-gauge, as the folded lip of the washer positioned against the outer perimeter of the shaft provides an suitable seal while not preventing the shaft from rotating with the rod, whereby not affecting the operation of the fuel-gauge.

Additionally, the particular positioning of the folded lip of the sealing washer against the perimeter of the shaft allows it to stretch and axially slide around the shaft, should the washer inflate and expand because of contact with the fuel, instead of its internal edge acting radially against the shaft to immobilize it, as it usually occurs with the "O" rings, thereby not causing a significant increase of the pressure around the shaft that could prevent the shaft from rotating.

### BRIEF DESCRIPTION OF THE DRAWINGS

The sealing assembly for a watertight fuel-gauge housing according to the present invention will be better understood and objects other than those set forth above will become apparent when consideration is given to the following detailed description thereof. Such description makes reference to the annexed drawings wherein:
Figure 1 is a cross-sectional view of the fuel-gauge according to the present invention mounted on a fuel tank; and
Figure 2 is an enlarged view of the sealing assembly.

### PREFERRED EMBODIMENT OF THE INVENTION

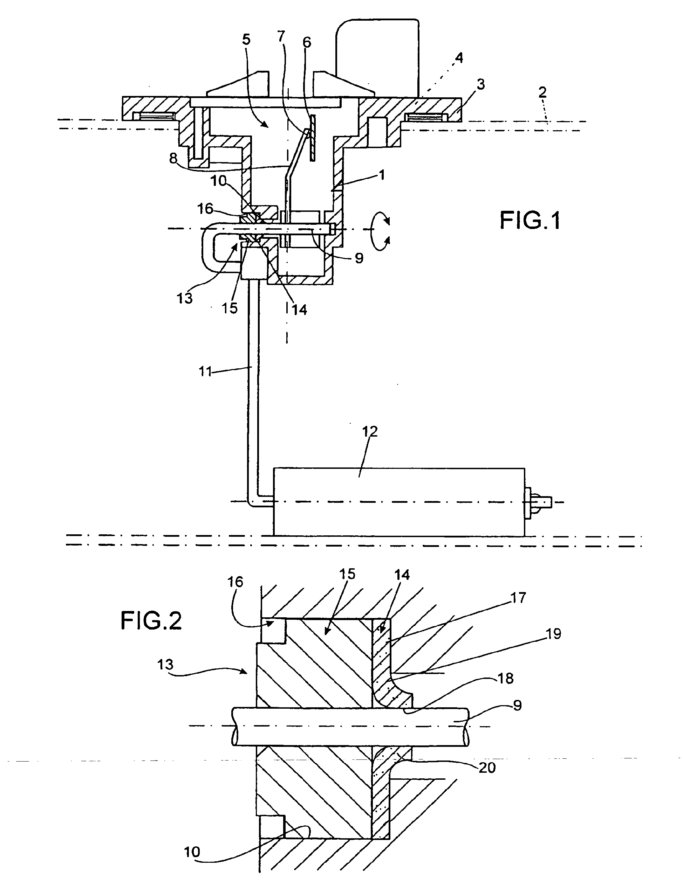

With reference now to the drawings, and in particular to Figure 1 thereof, the preferred embodiment of the new and improved sealing assembly for a watertight fuel-gauge housing according to the present invention is shown as comprising a housing 1 mounted on a fuel tank 2 in such a manner that at least part of said housing is positioned in the interior of the tank, said housing 1 being provided with mounting flanges 3 that cooperate with matching mounting projections 4 formed on the outer surface of the tank.

A gauge mechanism 5 is mounted within the housing 1, said mechanism comprising a resistor 6 fixedly positioned within said housing to make contact with a movable cursor 7 that slides over said resistor 6, the sliding movement causing a floating in the final resistance of resistor 6.

Cursor 7 is one end of an arm 8 which opposite end is fixedly mounted to a shaft 9 to rotate therewith. Shaft 9 has one end rotatably mounted upon an inner wall of housing 1 and its opposite end projects through an opening 10 formed on the opposite wall of the housing to connect to one end of a rod 11.

A floating device 12 is mounted on the opposite end of said rod 11 to float according to the level of fuel in the interior of the tank, thereby causing said rod 11 to rock, which rocking rotates shaft 9 within the housing 1, the arm 8 attached thereto and, consequently, the cursor 7 sliding against resistor 6, this sliding movement causing a floating in the final resistance of resistor 6 and providing an indication of the level of fuel within the tank.

The sealing assembly 13 according to the present invention comprises a rotatably movable sealing washer 14 and a mounting packing 15 tightly positioned within a seat 16 formed around the opening 10 of the housing 1 through which one end of said shaft 9 projects.

The sealing washer 14 has a central opening 18 which inner diameter is slightly smaller than the outer diameter of said shaft 9, whereby it forms a folded lip 20 around the periphery of the shaft 9 when the washer 14 is mounted upon the shaft.

The peripheral region 17 of the sealing washer 14 is positioned against the bottom of the seat 16 and the mounting packing 15 is mounted thereupon tightly fixing to the side walls of seat 16, thereby maintaining the sealing washer 14 in position.

This arrangement of the sealing washer 14 and a mounting packing 15, the former laying adjacent to the bottom of the seat 16 formed around the opening 10 of the housing 1 and the latter fitting tightly against the side walls of seat 16 allow the sealing washer to freely rotate with the shaft 9 while being maintained in position by the mounting packing 15.

This constructions solves the problems related to the use of "O" rings for sealing the housing of the fuel-gauge, as the folded lip of the washer positioned against the outer perimeter of the shaft provides an suitable seal while not preventing the shaft from rotating with the rod, thereby not affecting the operation of the fuel-gauge.

Additionally, this particular positioning of the folded lip of the sealing washer against the perimeter of the shaft allows it to stretch and axially slide around the shaft, should the washer inflate and expand because of contact with the fuel, instead of its internal edge acting radially against the shaft to immobilize it, as it would occur with an "O" ring, thereby not increasing the pressure around the shaft that could prevent it from rotating.

The sealing washer 14 can be made of any suitable material used in sealing devices, preferably an elastomer, while mounting packing 15 is preferably made of brass.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention, as defined by the claims.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention, as defined by the claims.

## Claims

1. A watertight fuel-gauge housing comprising:
a housing (1) at least partially positioned in the interior of a fuel tank (2);
a gauge mechanism (5) within said housing (1) for providing an indication of the level of fuel within said tank (2) according to the position of a floating device connected to a shaft (9) that penetrates the housing (1); and
a sealing assembly (13) for sealing the opening through which said shaft (9) penetrates the housing (1), **characterized in that**
the sealing assembly comprising a rotatably movable sealing washer (14) and a mounting packing (15) tightly positioned within a seat (16) formed around the opening (10) of the housing through which said shaft projects,
wherein the sealing washer (14) has a central opening (18) with an inner diameter slightly smaller than the outer diameter of the shaft (9) that forms a folded lip (20) around the shaft (14) when the washer is mounted upon the shaft (9), wherein the folded lip (20) of the washer positioned against the outer perimeter of the shaft (9) provides a suitable seal while not preventing the shaft (9) from rotating with the rod.

2. The watertight fuel-gauge housing according to any of the preceding claims wherein said rotatably movable sealing washer (14) is made of a suitable material used for sealing.

3. The watertight fuel-gauge housing according to claim 1, wherein said rotatably movable sealing washer (14) is made of an elastomeric.

4. The watertight fuel-gauge housing according to any of the preceding claims wherein said mounting packing (15) is made of brass.

5. The watertight fuel-gauge housing according to any of the preceding claims wherein said gauge mechanism comprises a resistor (6) fixedly positioned within said housing to make contact with a movable cursor (7) slidable over said resistor (6) to cause a fluctuation in the resistance of said resistor (6).

6. The watertight fuel-gauge housing according to claim 5, wherein said cursor is one end of an arm (8) which opposite end is fixedly mounted to a shaft (9) to rotate therewith, said shaft having one end rotatably mounted upon an inner wall of the housing (1) and its opposite end projecting through an opening formed on the opposite wall of the housing.

7. The watertight fuel-gauge housing according to claim 6, wherein said end of said shaft (9) projecting through the opening in the housing connects to one end of a rod (11) which opposite end has a floating device mounted thereto.

## Patentansprüche

1. Ein wasserdichtes Kraftstoffanzeigengehäuse, das Folgendes umfasst:
ein Gehäuse (1), das mindestens teilweise im Inneren eines Kraftstofftanks (2) integriert ist;
ein Messmechanismus (5) innerhalb des besagten Gehäuses (1), um eine Anzeige des Kraftstofffüllgrads innerhalb des besagten Tanks (2) gemäß der Position einer Schwimmervorrichtung bereitzustellen, die mit einer Welle (9) verbunden ist, die in das Gehäuse (1) eindringt; und
eine Dichtanordnung (13) zur Abdichtung der Öffnung, durch welche die besagte Welle (9) in das Gehäuse (1) eindringt, **dadurch gekennzeichnet, dass**
die Dichtanordnung eine drehbar bewegliche Dichtungsscheibe (14) und ein Montagepaket (15) umfasst, die eng innerhalb einer Auflagefläche (16) positioniert sind, die um die Öffnung (10) des Gehäuses gebildet ist, durch welche die erwähnte Welle herausragt,
wobei die Dichtungsscheibe (14) eine mittige Öffnung (18) mit einem Innendurchmesser besitzt, der geringfügig kleiner als der Außendurchmesser der Welle (9) ist, und eine gefaltete Lippe (20) um die Welle (14) bildet, wenn die Scheibe auf der Welle (9) montiert ist, wobei die gefaltete Lippe (29) der gegen den äußeren Umfang der Welle (9) positionierten Scheibe eine geeignete Dichtung bereitstellt, die Welle (9) jedoch gleichzeitig nicht daran hindert, sich mit der Stange zu drehen.

2. Das wasserdichte Kraftstoffanzeigengehäuse nach irgendeinem der vorherigen Ansprüche, wobei die besagte drehbar bewegliche Dichtungsscheibe (14) aus einem geeigneten Material besteht, das zum Abdichten verwendet wird.

3. Das wasserdichte Kraftstoffanzeigengehäuse nach Anspruch 1, wobei die besagte drehbar bewegliche Dichtungsscheibe (14) aus einem Elastomer besteht.

4. Das wasserdichte Kraftstoffanzeigengehäuse nach irgendeinem der vorherigen Ansprüche, wobei das besagte Montagepaket (15) aus Messing besteht.

5. Das wasserdichte Kraftstoffanzeigengehäuse nach irgendeinem der vorherigen Ansprüche, wobei der besagte Messmechanismus einen Widerstand (6) umfasst, der starr innerhalb des besagten Gehäuses positioniert ist, um einen Kontakt mit einem beweglichen Schleifer (7) herzustellen, der auf dem besagten Widerstand (6) verschiebbar ist, um eine Schwankung der Widerstandskraft des besagten Widerstands (6) zu erzeugen.

6. Das wasserdichte Kraftstoffanzeigengehäuse nach Anspruch 5, wobei der besagte Schleifer ein Ende eines Arms (8) ist, dessen gegenüberliegendes Ende starr mit einer Welle (9) verbunden ist, um sich mit dieser zu drehen, wobei ein Ende der besagten Welle drehbar auf einer Innenwand des Gehäuses (1) montiert ist und das gegenüberliegende Ende durch eine Öffnung herausragt, die in der gegenüberliegenden Gehäusewand gebildet ist.

7. Das wasserdichte Kraftstoffanzeigengehäuse nach Anspruch 6, wobei das durch die Öffnung herausragende besagte Ende der besagten Welle (9) mit einem Ende einer Stange (11) verbunden ist, auf deren gegenüberliegendem Ende eine Schwimmervorrichtung montiert ist.

## Revendications

1. Un logement étanche à l'eau de jauge de niveau de carburant comprenant :
un logement (1) placé au moins partiellement à l'intérieur d'un réservoir à carburant (2) ;
un mécanisme de jauge (5) dans ledit logement (1) pour fournir une indication sur le niveau de carburant dans ledit réservoir (2) en fonction de la position d'un dispositif flottant relié à un axe (9) qui pénètre dans le logement (1) ; et
un ensemble d'éléments de fermeture (13) pour obturer l'ouverture à travers laquelle ledit axe (9) pénètre dans le logement (1), **caractérisé en ce que**
l'ensemble d'éléments de fermeture comprenant une rondelle d'étanchéité tournante (14) et une garniture de fixation (15) serrée à l'intérieur d'une assise (16) formée autour de l'ouverture (10) du logement à travers laquelle l'axe se projette,
dans lequel la rondelle d'étanchéité (14) possède une ouverture centrale (18) dont le diamètre interne est légèrement plus petit que le diamètre externe de l'axe (9) qui forme une lèvre repliée (20) autour de l'axe (14) lorsque la rondelle est montée sur l'axe (9), dans lequel la lèvre repliée (20) de la rondelle placée contre le périmètre externe de l'axe (9) fait office de joint sans empêcher pour autant l'axe (9) de tourner avec la tige.

2. Le logement étanche à l'eau de jauge de niveau de carburant selon n'importe laquelle des revendications précédentes dans lequel ladite rondelle d'étanchéité tournante (14) est fabriquée dans un matériau adapté utilisé pour obturer.

3. Le logement étanche à l'eau de jauge de niveau de carburant selon la revendication 1, dans lequel ladite rondelle d'étanchéité tournante (14) est fabriquée dans un élastomère.

4. Le logement étanche à l'eau de jauge de niveau de carburant selon n'importe laquelle des revendications précédentes dans lequel ladite garniture de fixation (15) est fabriquée en laiton.

5. Le logement étanche à l'eau de jauge de niveau de carburant selon n'importe laquelle des revendications précédentes dans lequel ledit mécanisme de jauge comprend un résistor (6) fixé dans ledit logement pour qu'il fasse contact avec un curseur mobile (7) pouvant glisser sur ledit résistor (6) afin de provoquer une fluctuation dans la résistance dudit résistor (6).

6. Le logement étanche à l'eau de jauge de niveau de carburant selon la revendication 5, dans lequel ledit curseur est une extrémité d'un bras (8) dont l'extrémité opposée est fixement assemblée à un axe (9) pour tourner avec ce dernier, ledit axe possède une extrémité montée, de façon à pouvoir tourner, sur une paroi interne du logement (1) et son extrémité opposée se projette à travers une ouverture formée sur la paroi opposée du logement.

7. Le logement étanche à l'eau de jauge de niveau de carburant selon la revendication 6, dans lequel ladite extrémité dudit axe (9) se projetant à travers l'ouverture dans le logement est reliée à une extrémité d'une tige (11) dont l'extrémité opposée possède un dispositif flottant monté sur cette dernière.
